# FASCICULE DE BREVET EUROPEEN

(11) **EP 0 974 896 B1**
(45) Date de publication et mention de la délivrance du brevet: **30.04.2014**
(21) Numéro de dépôt: 99401785.3
(22) Date de dépôt: 16.07.1999
(51) Int. Cl.: G06F 9/44

(54) **Système de téléchargement d'objets ou de fichiers pour mise à jour de logiciels**
Verfahren zur Fernladung von Objekten oder Dateien um Software zu Aktualisieren
Method for downloading objects or files to update software

(30) Priorité: 21.07.1998 FR 9809296
(43) Date de publication de la demande: 26.01.2000
(60) Demande divisionnaire: 10179053.3
(73) Titulaire: Touchtunes Music Corporation, Las Vegas, NV 89104 (US)
(72) Inventeur: Nathan, Guy, 91330 Yerres (FR); Dion, Dominique, Laval, Quebec H7L 4N8 (CA)
(74) Mandataire: Debay, Yves

(56) Documents cités:
- EP-A- 0 498 130
- EP-A- 0 632 371
- US-A- 4 558 413
- US-A- 5 708 811
- "METHOD FOR AUTOMATED ASSEMBLY OF SOFTWARE VERSIONS" IBM TECHNICAL DISCLOSURE BULLETIN, vol. 30, no. 5, octobre 1987 (1987-10), pages 353-355, XP000022447
- BONCZEK R H ET AL: "The DSS development system" 1983 NATIONAL COMPUTER CONFERENCE, ANAHEIM, CA, USA, 16-19 MAY 1983, pages 421-435, XP002100825 ISBN 0-88283-039-2, 1983, Arlington, VA, USA, AFIPS Press, USA
- "SAFE MECHANISM FOR INSTALLING OPERATING SYSTEM UPDATES WITH APPLICATIONS", IBM TECHNICAL DISCLOSURE BULLETIN, INTERNATIONAL BUSINESS MACHINES CORP. (THORNWOOD), US, vol. 41, no. 1, 1 January 1998 (1998-01-01), pages 557-559, XP000772211, ISSN: 0018-8689

## Description

La présente invention concerne un système de téléchargement d'objets ou de fichiers pour mise à jour de logiciels, notamment pour les systèmes de reproduction audiovisuelle déclenchés par paiement de redevances, tels que juke-box ou autres appareils.

Il est connu dans l'art antérieur des dispositifs de téléchargement de système d'exploitation à travers un réseau tels que, par exemple par la demande de brevet britannique N° 2 231 180. Cette demande de brevet enseigne d'effectuer le chargement d'un premier calculateur lié à travers un réseau à un deuxième calculateur en chargeant un sous-ensemble du système d'exploitation dans la mémoire du premier calculateur, le sous-ensemble comprenant les commandes permettant la copie des fichiers, la création d'un répertoire, le formatage du disque ainsi que le fonctionnement d'une connexion à travers le réseau pour ensuite utiliser ce sous-ensemble pour transférer du second calculateur l'ensemble des fichiers de système d'exploitation sur le disque du premier calculateur.

Dans ce type de téléchargement, il convient d'effectuer le chargement de l'ensemble du système d'exploitation et de tous les fichiers du système d'exploitation. Ceci amène donc soit à limiter les téléchargements, soit à occuper, pendant des temps relativement longs, des systèmes de télécommunications pour effectuer des téléchargements dans le cas où les systèmes d'exploitation ou les fichiers associés doivent être renouvelés fréquemment.

Il est également connu par le brevet américain N° 4 958 278 un système de téléchargement sur un terminal non pourvu de lecteur de disques.

Il est également connu par le brevet français N° 2 682 786 un autre procédé de téléchargement sur un terminal non pourvu de disque dur.

Enfin un dernier brevet européen N° 0 358 992 enseigne une méthode de téléchargement à travers un réseau de système d'exploitation ou de programmes exécutables sur un calculateur qui ne comporte pas de dispositif d'amorçage ou d'autres dispositifs contenant le programme exécutable. Un premier programme d'amorçage minimum est transféré dans un premier temps, puis ce premier programme d'amorçage minimum s'exécute, établit une liaison logique vers un disque du serveur et autorise l'ordinateur de requête à traiter le disque du serveur comme un dispositif d'amorçage local.

Le but de l'invention est d'une part, d'éviter la nécessité de réamorcer le terminal sur lequel on télécharge et d'autre part, de permettre de transférer des fichiers d'exploitation ou des parties de programme exécutable sans avoir à réinitialiser la machine, tout en étant sûr que le fonctionnement du système ne sera pas dégradé par la version téléchargée.

Ce but est atteint par le fait que l'architecture du système d'exploitation comporte une répartition des différentes tâches en modules logiciels reliés entre eux par des liens dynamiques ou constitués de sous-programmes exécutables, présentant des liens de dépendance principale avec d'autres parties du système d'exploitation, chacun des modules étant constitué de fichiers d'objets ou de librairies représentées par des librairies de liens dynamiques "dynamic links libraries" organisées entre elles selon une pluralité de niveaux de dépendance décrits dans leurs attributs respectifs.

Selon une autre particularité, les attributs d'un objet ou d'une librairie indiquent le numéro de version et les dépendances de l'objet par rapport à d'autres objets.

Selon une autre particularité, les attributs indiquent le niveau attribué aux modules.

Selon une autre particularité, les différentes tâches comprennent une tâche principale qui comporte un module (JUKECORE.DLL) qui est destiné à charger les librairies de liens dynamiques (DLL), à initialiser le noyau du programme, à initialiser le module de gestion des graphiques (GFX.DLL), à initialiser un module de chargement des librairies (WDLL.DLL), à charger un module Télécom des tâches de télécommunications (TELECOM.DLL) et à lancer un programme d'interpréteur d'écran en tant que tâche principale.

Selon une autre particularité, le programme est subdivisé en un certain nombre de modules définissant chacun une tâche spécifique à un terminal équipé d'au moins un modem de télécommunication et d'une unité centrale.

Selon une autre particularité, cette tâche spécifique est celle correspondant à un juke-box et comporte une tâche principale spécifique, un certain nombre de modules, définissant les fonctions "fenêtres" de l'affichage, qui sont les suivants :
- un module MOUSE.DJL d'exploitation des signaux souris ou de l'écran tactile ;
- un module WMESSAGE.DJL d'exploitation des messages échangés entre les objets ;
- un module FIL.DJL de gestion des fichiers sur disques ;
- un module FILIO.DJL de lecture-écriture de fichiers sur disques ;
- un module JSTRUCT.DJL de surveillance de tous les événements générés par les équipements, tels que l'écran tactile, la carte son, l'interface de traitement des équipements monétaires.

Selon une autre particularité, la tâche principale spécifique de l'application juke-box comporte un module (SILOAD.DLL) contenant la librairie du programme chargeur, destinée à vérifier les versions de librairies de liens dynamiques requises, de les charger et d'appeler le module des tâches Télécom pour effectuer le transfert de fichiers.

Selon une autre particularité, ce module SILOAD.DLL comporte la liste dans un fichier (DLL.DEFAULT) des versions minimales nécessaires au fonctionnement ainsi que la liste de toutes les fonctions représentées, soit par des bibliothèques (DATA JUKEBOX LIBRARY), soit par des fichiers d'objets (DJO, DATA JUKEBOX OBJECT).

Selon une autre particularité, chaque objet ou bibliothèque contient la liste de toutes les fonctions, dont la bibliothèque ou l'objet a besoin, ainsi que les numéros de version et les dépendances.

Selon une autre particularité, le module WDLL.DLL comporte des moyens de gérer tous les nouveaux modules, de vérifier que les modules téléchargés n'ont aucune dépendance manquante et ont été chargés avec les versions nécessaires.

Selon une autre particularité, le module SILOAD.DLL comporte des moyens de gérer le chargement, des modules spécifiques à la tâche du terminal, à savoir tous les modules DJL déjà énumérés ainsi que les modules de librairie juke-box constitués par un module WOBJECT.DJL qui gère les objets, le mixeur, les achats ; un module WCURSOR.DJL qui gère les mouvements du curseur ; un module DBMAPI.DJL qui gère la base de donnée ; un module WFONTS.DJL qui gère tous les types de fonte ; un module PARSER.DLL (PARSER Programme d'analyse) qui analyse et génère les écrans à partir du script et vérifie la grammaire à l'aide d'un module "GRAMMAR.DJL" et d'un module lexique "LEXY.DJL".

Selon une autre particularité, le module de chargement de librairie SILOAD.DLL comporte un module "WINDEF" qui contient la liste des fichiers qu'il faut inclure pour gérer les fenêtres d'un affichage fenêtres prévu sur le moniteur du terminal de type juke-box.

Selon une autre particularité, cette liste d'objets est constituée :
- d'un module objet "OBJET WPSCREEN.DJO" qui permet de définir la page principale sur le moniteur ;
- d'un module "WSCREEN.DJO" qui permet de déterminer dans cette page principale le nombre d'écrans disponibles et ainsi permettre l'affichage de plusieurs fenêtres ou écrans ;
- d'un module "WIMAGE.DJO" qui permet de déterminer et de définir dans l'écran l'image qu'il utilisera ;
- d'un module "WANIM.DJO" qui permet de définir l'animation lorsque l'image est animée ;
- d'un module "WBUTTON.DJO" qui permet de définir et gérer les boutons qui sont utilisés sur l'écran de la page principale ;
- d'un module "WLABEL.DJO" qui permet de créer des étiquettes permettant l'écriture par-dessus un objet ; et
- d'un module "WSCROLLER.DJO" qui permet de définir des zones d'affichage à défilement ? entre deux points par exemple, vertical, horizontal, diagonal.

Selon une autre particularité, l'ensemble de ces modules d'objets gérés par la tâche principale, utilise une librairie "JHANDLER" qui permet, par des moyens, de définir les utilisations fixes des écrans et donc de déterminer quelles sont les interfaces qui assurent la liaison avec les différents objets définis par les modules précédents.

Selon une autre particularité, la tâche SILOAD.DLL comporte des moyens de lancer ou charger le module "XCP.DJP" permettant de gérer les tâches de paiement telles que les systèmes de réception de billets ou les unités de paiement à monnaie ou à carte et permet également la sauvegarde des informations de base dans le IBUTTON.

D'autres particularités et avantages de la présente invention apparaîtront plus clairement à la lecture de la description ci-après faite en référence aux dessins annexés dans lesquels :

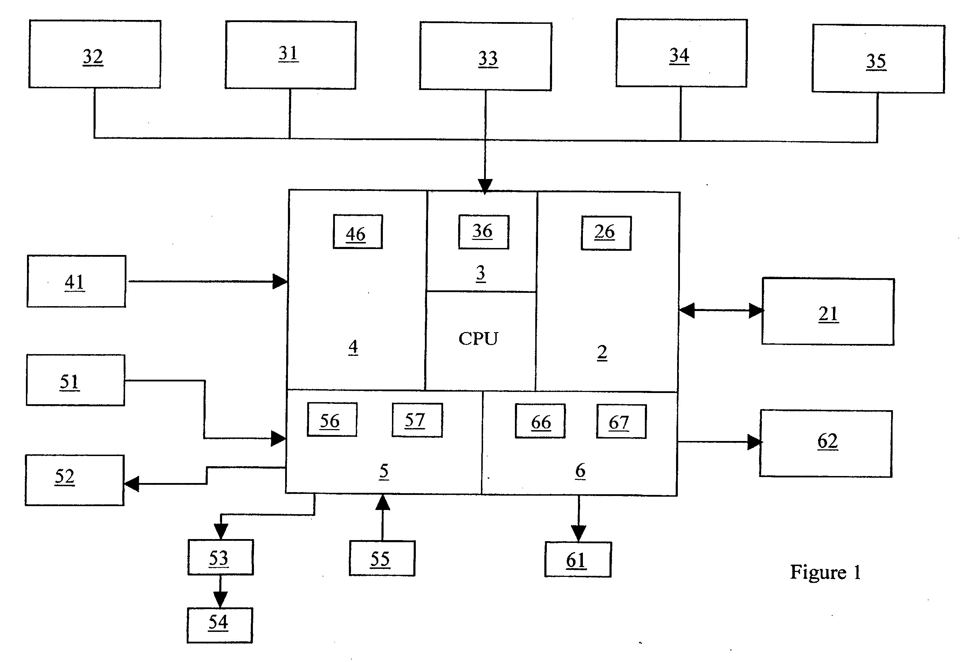

- la figure 1 représente une vue schématique du schéma électrique du matériel constituant l'intention,
- la figure 2 représente un logigramme des relations entre les modules de librairies et les modules d'objets.

De préférence, mais cependant de manière non limitative, le système de reproduction audiovisuelle utilise les éléments matériels énumérés et référencés ci-après.

L'unité centrale 1 à microprocesseur est un système compatible PC de haute performance, le choix lors de la mise en oeuvre s'étant porté sur un système du type Pentium qui possède des moyens de mémorisation et les caractéristiques suivantes:
- compatibilité avec le bus local Vesa,
- antémémoire de processeur: 256 kO minimum,
- mémoire vive: RAM de 32 MO
- ports série de haute performance,
- adaptateur graphique type SVGA à microprocesseur
- contrôleur de bus type SCSI/2,
- mémoire vive RAM statique auto-alimentée.

Toute autre unité centrale, possédant des performances équivalentes ou supérieures, pourra être utilisée dans l'invention.

Cette unité centrale commande et gère une circuit de commande de son (5), un circuit (4) de commande des télécommunications, un circuit (3) de commande des entrées, un circuit (2) de commande de la mémorisation de masse et un circuit (6) de commande des moyens de visualisation. Les moyens de visualisation se composent principalement d'un moniteur vidéo (62) à écran plat sans entrelacement de type SVGA à haute résolution et faible rayonnement, c'est ce moniteur qui est utilisé pour la reproduction d'images (par exemple les couvertures d'albums des sélections musicales), de graphiques ou de clips vidéo,

Des moyens de mémorisation de masse (21), utilisant des disques durs de type SCSI haute vitesse et haute capacité, sont associés aux moyens de mémorisation déjà présents dans le dispositif à microprocesseur. Ces moyens servent au stockage d'informations audiovisuelles numérisées et compressées.

Un adaptateur de modem de télécommunications (41) haute vitesse est intégré pour autoriser la liaison avec un réseau de distribution d'informations audiovisuelles contrôlé par un serveur central.

Pour la reproduction des informations sonores des sélections musicales, le système comporte des haut-parleurs (54) recevant le signal d'un amplificateur-tuner (53) relié au circuit électronique (5) incorporant deux tampons mémoire (56, 57) et de type synthétiseur de musique prévu pour supporter un grand nombre de sources d'entrée tout en fournissant une sortie présentant une qualité de type CD (disque compact).

De même, le circuit de commande des moyens de visualisation comporte également deux mémoires tampon (66, 67) dans le but explicité ultérieurement.

Une alimentation thermiquement régulée de 240 watts ventilée fournit l'énergie au système. Cette alimentation est protégée contre les surintensités et les suroscillations.

Le système de reproduction audiovisuelle gère, par le biais de son circuit contrôleur d'entrée (3), un écran tactile (33) qui inclut un panneau de revêtement de la vitre utilisant la "technologie avancée d'onde de surface" ainsi qu'un contrôleur de bus de type AT. Cet écran tactile permet après avoir affiché sur le moniteur vidéo (62) ou l'écran d'un téléviseur (61) diverses informations de sélection utilisées par les clients, ainsi que des informations de commande et de contrôle de gestion utilisées par le gérant ou le propriétaire du système. Il est également utilisé à des fins de maintenance en combinaison avec un clavier externe (34) qui peut être relié au système qui possède pour cela un connecteur de clavier, contrôlé par un verrou à clé (32) à travers le circuit d'interface (3).

Le circuit d'entrée (3) interface également le système avec un ensemble télécommande (31) constitué, par exemple, d'une télécommande RF à fréquence à radio.

Un dispositif de paiement de redevances (35) est également relié au circuit d'interface d'entrée (3). Il est également possible d'utiliser tout autre dispositif qui permette la réception de tout mode de paiement par pièces, billets, jetons, cartes magnétiques ou à puces ou toute combinaison des moyens de paiement

Pour loger le système, il est de plus prévu un châssis ou bâti avec garnitures extérieures personnalisables.

Outre ces éléments, un microphone (55) sans fil est relié au contrôleur de son (5), ce qui permet de transformer ce dernier en un puissant système d'annonces et d'informations destinées au public ou éventuellement en machine de karaoké. De même un système de haut-parleurs sans fil peut être utilisé par le système.

L'ensemble (31) de commande à distance permet au gérant, par exemple de derrière le bar, d'accéder et de contrôler différentes commandes telles que:
- la commande marche/arrêt du microphone,
- la commande de mise en sourdine des haut-parleurs,
- la commande de contrôle de volume sonore,
- la commande d'annulation de la sélection musicale en train d'être écoutée.

Deux tampons (56, 57) sont associés au circuit contrôleur de son (5) pour permettre de mémoriser chacun, de façon alternative, une information correspondant à environ au moins un quart de seconde de son. De même deux tampons (66, 67) sont associés au circuit contrôleur de vidéo (6) capables, chacun et alternativement, de mémoriser environ au moins un dixième de seconde d'image. Enfin un tampon respectif (46, 36, 26) est associé à chacun des circuits contrôleur de communication(4), d'interface d'entrée (3) et de mémorisation (2).

Le logiciel d'exploitation du système a été élaboré autour d'une librairie d'outils et de services très largement orientés vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonore de même que la gestion des liaisons de télécommunications au travers du réseau de distribution. De plus, ce logiciel présente une grande flexibilité

Le système d'exploitation est partagé en modules comportant un premier module d'amorçage (7) lui-même subdivisé en un premier module (70) de programme principal, appelé "JUK.EXE", qui vérifie la mémoire et vérifie si le minimum d'objets est présent pour assurer le fonctionnement du juke-box ; un second module (71) lié dynamiquement et dépendant de celui-ci est constitué par le module appelé "JUKECORE.DLL". La fonction de ce second module (71) est de contenir les librairies de langage C et d'assurer la tâche principale.

L'architecture du système d'exploitation comporte une répartition des différentes tâches en modules logiciels reliés entre eux par des liens dynamiques ou constitués de sous-programmes exécutables présentant des liens de dépendance principale avec d'autres parties du système d'exploitation. Chacun des modules est constitué de fichiers d'objets ou de librairies de liens dynamiques "dynamic links library" organisés selon une pluralité de niveaux de dépendance décrits dans les attributs. Les attributs d'un objet ou d'une librairie indiquent le numéro de version et les dépendances du fichier d'objet ou de la librairie par rapport à d'autres fichiers d'objets, comme décrit ci-après pour le module appelé PARSER.DJL. Chaque attribut indique le niveau attribué au module. Ainsi, le module JUK.EXE (70) est de niveau supérieur aux modules JUKECORE.DLL (71), TLS.DLL (72), CRDE.DLL (73), GFX.DLL (74), WDLL.DLL (75), JEEP.DLL (9) et TELECOM.DLL (10), mais le module TELECOM.DLL (10) est dépendant du module JEEP.DLL (9) (voir lien 910), donc de niveau inférieur au module JEEP.DLL (9).

De même, JEEP.DLL (9) (voir lien 759) est de niveau inférieur au module WDLL.DLL (75), car dépendant de celui-ci et TLS (lien 725) de niveau supérieur à WDLL (75). Par contre, les modules TLS.DLL et GFX.DLL peuvent être de même niveau. La tâche principale comporte un module (JUKECORE.DLL) destiné à initialiser ou charger le module (73), le noyau du programme appelé "CRDE.DLL", à initialiser ou charger le module (74) de gestion des graphiques (GFX.DLL), à initialiser ou charger le module (75) de chargement (WDLL.DLL) des librairies, à charger le module (10) Télécom des tâches de télécommunications (DLL), à charger le module (72) TLS.DLL qui contient toutes les utilisations nécessaires au juke-box, aux télécoms, heure, décryptage, etc....., à initialiser ou charger la librairie des programmes JEEP.DLL (Juke Execution Exchange Protocol) assurant les tâches de serveur d'intégrité, de requête de chargement et le dialogue avec le serveur, et à lancer le module de programme (80, SILOAD.DLL) en tant que tâche principale. La tâche principale de l'application juke-box comporte le module (SILOAD.DLL) contenant la librairie du programme chargeur destinée à vérifier les versions de librairie à liens dynamiques requises dans le module de chargement des librairies (WDLL.DLL), de les charger ou d'appeler le module des tâches, Télécom pour effectuer le transfert de fichiers. Le module WDLL DLL comporte la liste dans un fichier (DLL.DEFAULT) des versions minimales nécessaires au fonctionnement ainsi que la liste de toutes les fonctions représentées soit par des bibliothèques (LIBRARY) (DLL, DJL), soit par des fichiers d'objets (DJO). Chaque objet ou bibliothèque contient la liste de toutes les fonctions, dont la bibliothèque ou l'objet a besoin, ainsi que les numéros de version et les dépendances. Le module de chargement des librairies WDLL.DLL assure la gestion de tous les nouveaux modules, s'assure des interdépendances et vérifie que les modules téléchargés n'ont aucune dépendance et ont été chargés avec les versions nécessaires. La partie applicative (8) propre à un juke-box comporte un certain nombre de modules chargés et lancés par le module SILOAD.DLL et définissant les fonctions "fenêtres" de l'affichage, qui sont les suivantes :
- un module (81) appelé MOUSE.DJL, d'exploitation des signaux souris ou de l'écran tactile ;
- un module (82) appelé WMESSAGE.DJL d'exploitation des messages échangés entre les objets et les différents autres modules ;
- un module (83) appelé FIL.DJL de gestion des fichiers sur disques ;
- un module (84) appelé FILIO.DJL, de lecture-écriture de fichiers sur disques ;
- un module (85) appelé JSTRUCT.DJL, de surveillance de tous les événements générés par les équipements, tels que l'écran tactile, la carte son, l'interface de traitement des équipements monétaire.

Le module SILOAD.DLL gère le chargement, des modules spécifiques à la tâche du terminal, à savoir tous les modules DJL déjà énumérés ainsi que les modules de librairie juke-box (87) constitués par un module appelé WOBJECT.DJL (870) qui gère les objets, tels que le mixeur, les achats ; un module appelé WCURSOR.DJL (871) qui gère les mouvements du curseur ; un module (872) appelé DBMAPI.DJL qui gère la base de donnée ; un module (873) appelé WFONTS.DJL qui gère tous les types de fonte ; un module (874) appelé PARSER.DJL (Programme d'analyse syntaxique) qui analyse et génère les écrans à partir du script et vérifie la grammaire à l'aide du module (876)appelé "GRAMMAR.DJL" et d'un module (875) appelé "LEXY.DJL" qui est le module lexique d'assignation des fonctions des mots à l'intérieur du langage. Le module PARSER.DJL (874) contient dans son en-tête de fichier les informations suivantes :
- - char *parser_version_info=: "DLL_INFO DJL;"
"DLL-NAME PARSER.DJL;"
"VERSION 1;"
"CREATOR KENDALF;"
"REQUIRIES lexyy.djl;4;"
"REQUIRIES grammar-.djl;5";

Tous les modules et toutes les librairies (DJO, DLL, DJL) contiennent des informations semblables à celles du module PARSER.DJL et ces informations déterminent les nécessités de version et de dépendance.

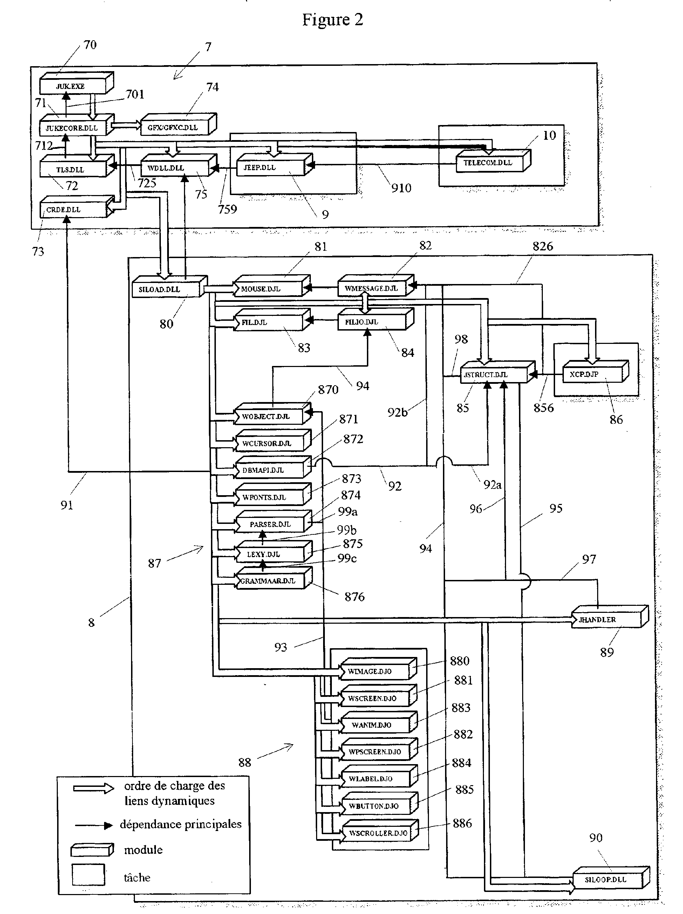

Ainsi, le module PARSER.DJL a besoin des modules LEXY.DJL version 4 et du module GRAMMAR version 5 pour permettre son exécution par le système. Les flèches doubles de la figure 2, reliant les différents modules entre eux, donnent l'ordre de chargement des différents fichiers. Ainsi, comme on l'a vu précédemment, il faudra commencer par charger le module JUKE.EXE pour ensuite charger le module JUKECORE.DLL et pouvoir, à partir du module JUKECORE.DLL, charger les modules GFX.DLL, TLS.DLL, WDLL.DLL, JEEP.DLL, TELECOM.DLL, CRDE.DLL et SILOAD.DLL.

Les flèches uniques représentent les dépendances entre modules. Ainsi, la flèche (91) indique que les fichiers DJL et en particulier, DBMAPI.DJL sont dépendants de CRDE.DLL. La flèche (93) montre que les fichiers DJO sont dépendants du module WOBJECT.DJL. Le module WOBJECT.DJL est lui-même dépendant du module FILIO.DJL. La flèche (92a) indique que le module DBMAPI.DJL est dépendant du module JSTRUCT.DJL et la flèche (92b) le module DBMAPI.DJL est dépendant du module WMESSAGE.DJL. La flèche (98) indique que le module JSTRUCT.DJL est dépendant du module WMESSAGE.DJL. Le module WMESSAGE.DJL est dépendant du module MOUSE.DJL et le module FILIO.DJL étant dépendant du module FIL.DJL. Le module XCP.DJP est dépendant, par la flèche (856), du module JSTRUCT.DJL et comme indiqué, par la flèche (826) du module WMESSAGE.DJL. Le module JHANDLER est dépendant, par la flèche (97), du module WMESSAGE.DJL et comme représenté, par la flèche (96) du module JSTRUCT.DJL. Le module SILOOP.DLL est dépendant, comme représenté par la flèche (95), du module JSTRUCT.DJL et par la flèche (94) du module WMESSAGE.DJL. Le module TELECOM.DLL est dépendant, comme indiqué par la flèche (910), du module JEEP.DLL qui est lui-même dépendant, comme montré par la flèche (959), du module WDLL.DLL. Le module WDLL.DLL est dépendant, par la flèche (725), du module TLS.DLL. De même, la flèche (89c) montre que le module GRAMMAR.DJL est dépendant du module LEXY.DLL et, par la flèche (99b), que le module LEXY.DJL est dépendant du module PARSER.DJLL. Ainsi, comme on a pu le voir précédemment, le module PARSER.DJL a besoin du module LEXY.DJL et du module GRAMMAR pour s'exécuter et la version 1 du module PARSER.DJL fait appel à la version 4 du module LEXY.DJL et à la version 5 du module GRAMMAR.DJL. De même, le module WOBJECT.DJL est dépendant par la flèche (99a) du module PARSER.DJL. Ainsi, tous les modules et toutes les librairies .DJO, .DLL, .DJL contiennent des informations semblables à celles du module PARSER.DJL qui déterminent les nécessités de version des différents modules dont un module donné est dépendant. Ces informations donnent également les dépendances du module vis-à-vis des autres modules, comme cela est indiqué par les flèches sur la figure 2.

Le module de chargement de librairie SILOAD.DLL charge également ou lance un module SILOOP.DLL (90) qui est une bande d'attente d'événement. Un ensemble de modules (88) contient la liste des fichiers qu'il faut inclure pour gérer les fenêtres d'un affichage fenêtres prévu sur le moniteur du terminal de type juke-box.

Cette liste d'objets est constituée :
- d'un fichier d'objets (883) "WPSCREEN.DJO" qui permet de définir la page principale sur le moniteur ;
- d'un fichier d'objets (881) "WSCREEN.DJO" qui permet de déterminer dans cette page principale le nombre d'écrans disponibles et ainsi permettre l'affichage de plusieurs fenêtres ou écrans ;
- d'un fichier d'objets (880) "WIMAGE.DJO" qui permet de déterminer et de définir dans l'écran l'image qu'il utilisera ;
- d'un fichier d'objets (882) "WANIM.DJO" qui permet de définir l'animation lorsque l'image est animée ;
- d'un fichier d'objets (885) "WBUTTON.DJO" qui permet de définir et gérer les boutons qui sont utilisés sur l'écran de la page principale tels que les boutons d'actionnement utilisés dans l'interface graphique définie dans la demande de brevet PCT WO 96/12258 ;
- d'un fichier d'objets (884) "WLABEL.DJO" qui permet de créer des étiquettes permettant l'écriture par-dessus un objet ; et
- d'un fichier d'objets (886) "WSCROLLER.DJO" qui permet de définir des zones d'affichage à défilement vertical.

Une librairie appelée "JHANDLER" permet de définir les utilisations fixes des écrans et donc, de déterminer quelles sont les interfaces qui assurent la liaison avec les différents objets définis par les modules précédents.

Le module (86) de librairie "XCP.DJP" permet de gérer les tâches de paiement telles que les systèmes de réception de billets ou les unités de paiement à monnaie ou à carte et permet également la sauvegarde des informations de base dans le IBUTTON qui est un circuit intégré de mémorisation de codes secrets pour l'utilisateur.

Ainsi, lorsqu'un nouveau fichier est envoyé par téléchargement au système, le fichier comporte des informations sur son niveau qui dépend du type de fichier. Les fichiers des images graphiques, par exemple WIMAGE.DJO, ont les niveaux les plus élevés et les fichiers de gestion des parties Hardware, tels que, par exemple XCP.DJP, ont les niveaux les plus bas. Le module JEEP.DLL vérifie la logique de dépendance en commençant par les fichiers de niveau les plus bas et en remontant vers les fichiers supérieurs tout en s'assurant que les dépendances nécessaires entre les fichiers ou librairies sont respectées. De cette façon, une modification dans le module WOBJECT.DJL va amener le module JEEP.DLL à vérifier que les informations de version nécessaires au module WOBJECT.DJL pour les fichiers DJO dépendants et nécessaires à son exécution correspondent aux versions minimales requises par les informations inscrites dans le fichier WOBJECT.DJL. Ainsi, si le module WOBJECT.DJL nécessite une version déterminée du module WPSCREEN.DJO, il vérifiera que cette version est au minimum présente et s'il n'y a qu'une version de niveau insuffisant, il signalera un problème, puis le module JEEP.DLL remontera les liens de dépendance vers les modules FILIO.DJL et FIL.DJL.

L'organisation du disque dur du Juke box est effectuée de façon à comporter un répertoire C:\NEWJUKE qui contient les nouveaux fichiers Juke box lorsqu'on télécharge de nouveaux modules. Un autre fichier C:\OLDJUKE contient la sauvegarde des versions stables des fichiers et modules nécessaires au fonctionnement du Juke box. Le module JEEP.DLL (JUKE EXECUTION EXCHANGE PROTOCOL) contient un gestionnaire automatique de fichiers qui conserve la trace des modules et fichiers mis à jour en sauvegardant les fichiers anciens pendant un certain temps et en déplaçant les nouveaux fichiers dans le répertoire NEWJUKE. Cette tâche enregistre également les fichiers sur les pistes du disque en cas d'incident soudain pendant l'opération de téléchargement. Le module JEEP.DLL contient également un gestionnaire de redémarrage dont la responsabilité est de changer les niveaux d'exécution des fichiers du Juke box une fois que le gestionnaire automatique de fichiers a déterminé qu'une mise à jour du Juke box s'était produite. Le module JEEP.DLL génère également un fichier MISDEPS.DAT, lorsque la détection d'une dépendance manquante a été faite. Ce fichier contient des lignes de la forme NEEDPARSER.DLL → version 2.0 ; NEEDLEXY.DLL → version 2.0, etc, ....... Ce fichier permet au serveur par lecture de ce fichier MISDEPS.DAT de déterminer les modules sur le juke box et de les recharger.

## Revendications

1. Système de téléchargement d'objets ou de fichiers pour mise à jour de logiciels, comprenant une architecture du système d'exploitation incluant une répartition de différentes tâches en modules logiciels reliés entre eux par des liens dynamiques ou constitués de sous-programmes exécutables présentant des liens de dépendance avec d'autres parties du système d'exploitation, lesdits liens de dépendance étant décrits dans les attributs des sous-programmes, chacun des modules logiciels étant constitué de fichiers d'objets ou de fichiers de librairies représentés par des librairies de liens dynamiques "dynamic links libraries" organisées entre elles selon une pluralité de dépendance décrites dans leurs attributs respectifs, **caractérisé en ce que** les différentes tâches comprennent une tâche principale d'un module (7) d'amorçage qui comporte un module (JUKECORE.DLL) qui est destiné à charger les librairies de liens dynamiques (DLL), à initialiser le noyau du programme, à initialiser un module de chargement des librairies (WDLL.DLL), à charger un module Télécom des tâches de télécommunications (TELECOM.DLL), à initialiser ou charger une librairie des programmes (JEEP.DLL) assurant les tâches de vérification de la logique de dépendance, de requête de chargement et le dialogue avec le serveur et à lancer un module (SILOAD.DLL) en tâche principale d'une application (8) jukebox pour vérifier les versions de librairies à liens dynamiques requises dans le module de chargement (WDLL.DLL), et les charger ou appeler le module des tâches Télécom pour effectuer le téléchargement de fichiers et **en ce que** le module (JEEP.DLL) contient un gestionnaire automatique de fichiers qui conserve la trace des modules et fichiers mis à jour en sauvegardant les fichiers anciens pendant un certain temps et en déplaçant les nouveaux fichiers dans un répertoire (NEWJUKE).

2. Système de téléchargement d'objets ou de fichiers pour mise à jour de logiciels selon la revendication 1, **caractérisé en ce que** ce module (SILOAD.DLL) comporte la liste dans un fichier (DLL.DEFAULT) des versions minimales nécessaires au fonctionnement ainsi que la liste de toutes les fonctions représentées, soit par des bibliothèques (DJL, DATA JUKEBOX LIBRARY), soit par des fichiers d'objets (DJO, DATA JUKEBOX OBJECT).

3. Système de téléchargement d'objets ou de fichiers pour mise à jour de logiciels selon la revendication 1, **caractérisé en ce que** le module (WDLL.DLL) de chargement des librairies comporte des moyens (JEEP.DLL) de gérer tous les nouveaux modules et de vérifier que les modules téléchargés n'ont aucune dépendance manquante et ont été chargés avec les versions nécessaires.

4. Système de téléchargement d'objets ou de fichiers pour mise à jour de logiciels selon la revendication 2, **caractérisé en ce que** chaque objet ou bibliothèque contient la liste de toutes les fonctions, dont la bibliothèque ou l'objet a besoin, ainsi que les numéros de version et les dépendances.

5. Système de téléchargement d'objets ou de fichiers pour mise à jour de logiciels selon la revendication 1, **caractérisé en ce que** l'organisation du disque dur du Juke box est effectuée de façon à comporter un répertoire (C:\OLDJUKE) contenant la sauvegarde des versions stables des fichiers et modules nécessaires au fonctionnement du Juke box.

6. Système de téléchargement d'objets ou de fichiers pour mise à jour de logiciels selon la revendication 1, **caractérisé en ce que** le module (JEEP.DLL) enregistre les fichiers sur les pistes du disque en cas d'incident soudain pendant l'opération de téléchargement.

7. Système de téléchargement d'objets ou de fichiers pour mise à jour de logiciels selon la revendication 1, **caractérisé en ce que** le module (JEEP.DLL) contient un gestionnaire de redémarrage dont la responsabilité est de changer les niveaux d'exécution des fichiers du Juke box une fois que le gestionnaire automatique de fichiers a déterminé qu'une mise à jour du Juke box s'est produite.

8. Système de téléchargement d'objets ou de fichiers pour mise à jour de logiciels selon la revendication 7, **caractérisé en ce que** le module (JEEP.DLL) génère un fichier (MISDEPS.DAT), lorsque la détection d'une dépendance manquante a été faite soit signale un niveau de version insuffisant.

9. Système de téléchargement d'objets ou de fichiers pour mise à jour de logiciels selon la revendication 1, **caractérisé en ce que** le programme est subdivisé en un certain nombre de modules définissant chacun une tâche spécifique à un terminal équipé d'au moins un modem de télécommunication et d'une unité centrale.

10. Système de téléchargement d'objets ou de fichiers pour mise à jour de logiciels selon la revendication 8, **caractérisé en ce que** cette tâche spécifique est celle correspondant à un juke-box et comporte une tâche principale spécifique, un certain nombre de modules, définissant les fonctions "fenêtres" de l'affichage, qui sont les suivants:
- un module (MOUSE.DJL) d'exploitation des signaux souris ou de l'écran tactile ;
- un module (WMESSAGE.DJL) d'exploitation des messages échangés entre les objets ;
- un module (FIL.DJL) de gestion des fichiers sur disques ;
- un module (FILIO.DJL) de lecture-écriture de fichiers sur disques ;
- un module (JSTRUCT.DJL) de surveillance de tous les événements générés par les équipements, tels que l'écran tactile, la carte son, l'interface de traitement des équipements monétaires.

11. Système de téléchargement d'objets ou de fichiers pour mise à jour de logiciels selon la revendication 1, **caractérisé en ce que** le module (SILOAD.DLL) comporte des moyens de gérer le chargement et des modules spécifiques à la tâche du terminal, à savoir tous lesdits modules DJL ainsi que les modules de librairie juke-box constitués par un module (WOBJECT.DJL) qui gère les objets, le mixeur et les achats; un module (WCURSOR.DJL) qui gère les mouvements du curseur; un module (DBMAPI.DJL) qui gère la base de donnée; un module (WFONTS.DJL) qui gère tous les types de fonte; un module (PARSER.DLL) (PARSER Programme d'analyse) qui analyse et génère les écrans à partir du script et vérifie la grammaire à l'aide d'un module grammaire (GRAMMAR.DJL) et d'un module lexique (LEXY.DJL).

12. Système de téléchargement d'objets ou de fichiers pour mise à jour de logiciels selon la revendication 10, **caractérisé en ce que** le module de chargement de librairie (SILOAD.DLL) comporte un module (WINDEF) qui contient la liste des fichiers qu'il faut inclure pour gérer les fenêtres d'un affichage fenêtres prévu sur le moniteur du terminal de type juke-box.

13. Système de téléchargement d'objets ou de fichiers pour mise à jour de logiciels selon la revendication 11, **caractérisé en ce que** cette liste d'objets est constituée :
- d'un module objet (OBJET WPSCREEN.DJO) qui permet de définir la page principale sur le moniteur ;
- d'un module (WSCREEN.DJO) qui permet de déterminer dans cette page principale le nombre d'écrans disponibles et ainsi permettre l'affichage de plusieurs fenêtres ou écrans ;
- d'un module (WIMAGE.DJO) qui permet de déterminer et de définir dans l'écran l'image qu'il utilisera ;
- d'un module (WANIM.DJO) qui permet de définir l'animation lorsque l'image est animée;
- d'un module (WBUTTON.DJO) qui permet de définir et gérer les boutons qui sont utilisés sur l'écran de la page principale ;
- d'un module (WLABEL.DJO) qui permet de créer des étiquettes permettant l'écriture par-dessus un objet ; et
- d'un module (WSCROLLER.DJO) qui permet de définir des zones d'affichage à défilement entre deux points.

14. Système de téléchargement d'objets ou de fichiers pour mise à jour de logiciels selon la revendication 12, **caractérisé en ce que** l'ensemble de ces modules d'objets gérés par la tâche principale, utilise une librairie (JHANDLER) qui permet de définir les utilisations fixes des écrans et donc de déterminer quelles sont les interfaces qui assurent la liaison avec les différents objets définis par les modules précédents.

15. Système de téléchargement d'objets ou de fichiers pour mise à jour de logiciels selon la revendication 1, **caractérisé en ce que** le module (SILOAD.DLL) comporte des moyens de lancer ou charger le module (XCP.DJP) permettant de gérer des tâches de paiement et permet également la sauvegarde des informations de base dans un IBUTTON.

## Patentansprüche

1. System zum Herunterladen von Objekten oder Dateien zur Softwareaktualisierung, aufweisend eine Betriebssystemarchitektur mit einer Verteilung von unterschiedlichen Tasks auf Softwaremodule, die miteinander durch dynamische Verbindungen verbunden sind oder durch ausführbare Unterprogramme gebildet sind, die Abhängigkeitsverknüpfungen mit anderen Teilen des Betriebssystems haben, wobei die Abhängigkeitsverknüpfungen in den Attributen der Unterprogramme beschrieben sind, wobei jedes der Softwaremodule aus Objektdateien oder Bibliotheksdateien, die durch dynamische Verbindungsbibliotheken "dynamic link libraries", die zueinander gemäß einer Mehrzahl von Abhängigkeiten, die in ihren jeweiligen Attributen beschrieben sind, organisiert sind, besteht, dadurch charakterisiert, dass die unterschiedlichen Tasks einen Haupttask eines Startmoduls (7), das ein Modul (JUKECORE.DLL) aufweist, das vorgesehen ist zum Laden der dynamischen Verbindungsbibliotheken (DLL), zum Initialisieren des Programmkerns, zum Initialisieren eines Moduls zum Laden von Bibliotheken (WDLL.DLL), zum Laden eines Telekommunikationsmoduls für Telekommunikationsaufgaben (TELECOM.DLL), zum Initialisieren oder Laden einer Programmbibliothek (JEEP.DLL), die die Tasks zur Verifikation der Logik der Abhängigkeit, der Ladeanforderung und des Dialogs mit dem Server gewährleistet und zum Starten eines Moduls (SILOAD.DLL) in dem Haupttask einer Jukebox-Applikation (8) zum Verifizieren der Versionen von im Lademodul (WDLL.DLL) angeforderten dynamischen Verbindungsbibliotheken und um sie zu Laden oder das Modul für Telekommunikationsaufgaben zum Durchführen des Herunterladens der Dateien aufzurufen und dadurch, dass das Modul (JEEP.DLL) eine automatische Dateiverwaltung aufweist, die die Spur von Modulen und aktualisierten Dateien durch Speichern der alten Dateien während einer bestimmten Zeit und verschrieben der neuen Dateien in ein Verzeichnis (NEWJUKE) beibehält.

2. System zum Herunterladen von Objekten oder Dateien zur Softwareaktualisierung gemäß Anspruch 1, dadurch charakterisiert, dass das Modul (SILOAD.DLL) die Liste in einer Datei (DLL.DEFAULT) von Minimal-Versionen, die für die Funktion notwendig sind, enthält, ebenso wie die Liste aller repräsentierten Funktionen, sei es durch Bibliotheken (DJL, DATA JUKEBOX LIBRARY), sei es durch Objektdateien (DJO, DATA JUKEBOX OBJECT).

3. System zum Herunterladen von Objekten oder Dateien zur Softwareaktualisierung gemäß Anspruch 1, dadurch charakterisiert, dass das Modul (WDLL.DLL) zum Laden von Bibliotheken Mittel (JEEP.DLL) zum Verwalten all der neuen Module und zum Verifizieren, dass die heruntergeladenen Module keinerlei fehlende Abhängigkeit haben und mit den notwendigen Versionen geladen wurden, aufweist.

4. System zum Herunterladen von Objekten oder Dateien zur Softwareaktualisierung gemäß Anspruch 2, dadurch charakterisiert, dass jedes Objekt oder jede Bibliothek die Liste mit allen Funktionen, die die Bibliothek order das Objekt benötigt, sowie die Versionsnummern und die Abhängigkeiten enthält.

5. System zum Herunterladen von Objekten oder Dateien zur Softwareaktualisierung gemäß Anspruch 1, dadurch charakterisiert, dass die Organisation der Restplatte der Jukebox auf die Weise vorgenommen wird, dass sie ein Verzeichnis (C:\OLDJUKE) aufweist, die die Sicherungskopien von stabilen Versionen der Dateien und Module aufweist, die für die Funktion der Jukebox nötig sind.

6. System zum Herunterladen von Objekten oder Dateien zur Softwareaktualisierung gemäß Anspruch 1, dadurch charakterisiert, dass das Modul (JEEP.DLL) die Dateien auf den Spuren der Platte im Falle eines plötzlichen Vorfalls während der Herunterladeoperation aufzeichnet.

7. System zum Herunterladen von Objekten oder Dateien zur Softwareaktualisierung gemäß Anspruch 1, dadurch charakterisiert, dass das Modul (JEEP.DLL) eine Neustartverwaltung aufweist, deren Verantwortung es ist, das Runlevel der Dateien der Jukebox zu ändern, sobald die automatische Dateiverwaltung festgestellt hat, dass eine Aktualisierung der Jukebox stattfindet.

8. System zum Herunterladen von Objekten oder Dateien zur Softwareaktualisierung gemäß Anspruch 7, dadurch charakterisiert, dass das Modul (JEEP.DLL) eine Datei (MISDEPS.DAT) erzeugt, wenn die Detektion einer fehlenden Abhängigkeit gemacht wurde, d.h. eine unzureichende Versionsstufe signalisiert.

9. System zum Herunterladen von Objekten oder Dateien zur Softwareaktualisierung gemäß Anspruch 1, dadurch charakterisiert, dass das Programm in eine bestimmte Anzahl von Modulen unterteilt ist, die jeweils einen spezifischen Task für ein Terminal, das mit mindestens einem Telekommunikationsmodem und einer Zentraleinheit ausgestattet ist, definieren.

10. System zum Herunterladen von Objekten oder Dateien zur Softwareaktualisierung gemäß Anspruch 8, dadurch charakterisiert, dass dieser spezifische Task der ist, der einer Jukebox entspricht und einen spezifischen Task, eine bestimmte Anzahl von Modulen, aufweist, die Fenster"-Anzeigefunktionen definieren, die die folgenden sind:
- ein Modul (MOUSE.DJL) zur Nutzung von Maussignalen oder Touchscreen-Signalen;
- ein Modul (WMESSAGE.DJL) zur Nutzung von zwischen den Objekten ausgetauschten Nachrichten;
- ein Modul (FIL.DJL) zur Dateiverwaltung auf Disks;
- ein Modul (FILIO.DJL) zum Lesen-Schreiben von Dateien auf Disks;
- ein Modul (JSTRUCT.DJL) zur Überwachung aller Ereignisse, die von den Geräten, wie dem Touchscreen, der Soundkarte und der Bedienschnittstelle der Geldapparatur erzeugt werden.

11. System zum Herunterladen von Objekten oder Dateien zur Softwareaktualisierung gemäß Anspruch 1, dadurch charakterisiert, dass das Modul (SILOAD.DLL) Mittel zum Verwalten des Ladens und spezifische Module in der Obliegenheit des Terminals, nämlich all die Module DJL als auch die Jukebox-Bibliothek-Module, gebildet durch ein MODUL (WOBJECT.DLL), das die Objekte, den Mixer und die Käufe verwaltet; ein Modul (WCURSOR.DLL), das die Bewegungen des Cursors verwaltet; ein Modul (DBMAPI.DJL), das die Datenbank verwaltet; ein Modul (WFONTS.DJL), das alle Fonttypen verwaltet; ein Modul (PARSER.DLL) (PARSER-Analyseprogramm), das die Bildschirme ausgehend vom Skript analysiert und die Grammatik mit Hilfe eines Grammatik-Moduls (GRAMMAR.DJL) und eines Wörterbuch-Moduls (LEXY.DJL) verifiziert, aufweist.

12. System zum Herunterladen von Objekten oder Dateien zur Softwareaktualisierung gemäß Anspruch 10, dadurch charakterisiert, dass das Bibliothekslademodul (SILOAD.DLL) ein Modul (WINDEF) aufweist, das die Liste von Dateien enthält, die zum Verwalten der Fenster einer Fensteranzeige, die auf dem Monitor des Jukebox-Terminals vorgesehen ist, miteinbezogen werden müssen.

13. System zum Herunterladen von Objekten oder Dateien zur Softwareaktualisierung gemäß Anspruch 11, dadurch charakterisiert, dass diese objektliste gebildet ist durch:
- ein objektmodul (OBJET WPSCREEN.DJO), das es ermöglicht, die Hauptseite auf dem Monitor zu definieren;
- nein Modul (WSCREEN.DJO), das es ermöglicht, auf dieser Hauptseite die Anzahl von verfügbaren Bildschirmen zum ermitteln und ebenso die Anzeige der mehreren Fenster oder Bildschirme ermöglicht;
- ein Modul (WIMAGE.DJO), das es ermöglicht, in dem Bildschirm das Bild zu definieren, das er verwenden wird;
- ein Modul (WANIM.DJO), das es ermöglicht, die Animation zu definieren, wenn das Bild animiert ist;
- ein Modul (WBUTTON.DJO), das es ermöglicht, schaltflächen zu definieren und zu verwalten, die auf dem Bildschirm der Hauptseite verwendet werden;
- ein Modul (WLABEL.DJO), das es ermöglicht, Labels zu erzeugen, die die Schrift unter einem Objekt ermöglichen; und
- ein Modul (WSCROLLER.DJO), das es ermöglicht, Anzeigezonen zum Scrollen zwischen zwei Punkten zu definieren.

14. System zum Herunterladen von Objekten oder Dateien zur Softwareaktualisierung gemäß Anspruch 12, dadurch charakterisiert, dass das Ensemble dieser von dem Haupttask verwaltete Objektmodule eine Bibliothek (JHANDLER) verwendet, die es ermöglicht, die festen Verwendungen der Bildschirme zu definieren und so zu ermitteln, welche die Schnittstellen sind, die die Verbindung mit den unterschiedlichen, durch die vorhergehenden Module definierten Objekte gewährleisten.

15. System zum Herunterladen von Objekten oder Dateien zur Softwareaktualisierung gemäß Anspruch 1, dadurch charakterisiert, dass das Modul (SILOAD.DLL) Mittel zum Starten oder Laden des Moduls (XCP.DJP) aufweist, das das Verwalten von Zahltasks ermöglicht und auch das Sichern von Basisinformationen in einem IBUTTON ermöglicht.

## Claims

1. System of downloading objects or files in order to update software, comprising an operating System architecture including a distribution of different tasks into software modules connected to one another by dynamic links or consisting of executable subroutines having dependence links to other parts of the operating system, said dependence links being described in the attributes of subroutines, each of the software modules being composed of object files or library files represented by dynamic link libraries organised between them according to a plurality of levels of dependence described in their respective attributes, **characterised in that** the different tasks comprise a principal task of a boot module (7) which includes a module (JUKECORE.DLL) which is intended to load the dynamic link libraries (DLL), to initialise the core of the program, to initialise a library loading module (WDLL.DLL), to load a Telecom module of telecommunications tasks (TELECOM.DLL), to initialise or load a program library (JEEP.DLL) ensuring the tasks of verification of the dependence logic, loading request and dialogue with the server and to launch a module (SILOAD.DLL) as a main task of a jukebox application (8) in order to verify the dynamic link library versions required in the loading module (WDLL.DLL), and to load them or call the Telecom tasks module in order to affect the downloading of files, and **in that** the module (JEEP.DLL) contains an automatic file manager which keeps track of the updated modules and fines by backing up the old files for a certain period of time and by moving the new files into a directory (NEWJUKE).

2. System of downloading objects or files in order to update software as claimed in Claim 1, **characterised in that** this module (SILOAD.DLL) includes the list in a file (DLL.DEFAULT) of the minimum versions necessary for operation as well as the list of all the functions represented either by libraries (DJL, DATA JUKEBOX LIBRARY) or by object files (DJO, DATA JUKEBOX OBJECT).

3. System of downloading objects or files in order to update software as claimed in Claim 1, **characterised in that** the module (WDLL.DLL) for loading libraries includes means (JEEP.DLL) for managing all the new modules and for verifying that the downloaded modules have no missing dependences and have been loaded with the necessary versions.

4. System of downloading objects or files in order to update software as claimed in Claim 2, **characterised in that** each object or library contains the list of all the functions which the library or the object requires, as well as the version numbers and the dependences.

5. System of downloading objects or files in order to update software as claimed in Claim 1, **characterised in that** the organisation of the hard disk of the jukebox is effected in such a manner as to include a directory (C:\OLDJUKE) containing the backup of the stable versions of the files and modules necessary for the operation of the jukebox.

6. System of downloading objects or files in order to update software as claimed in Claim 1, **characterised in that** the module (JEEP.DLL) records the files on the tracks of the disk in the event of a sudden incident during the downloading operation.

7. System of downloading objects or files in order to update software as claimed in Claim 1, **characterised in that** the modules (JEEP.DLL) contains a reboot manager which is responsible for changing the execution levels of the files of the jukebox once the automatic file manager has determined that an update of the jukebox has been performed.

8. System of downloading objects or files in order to update software as claimed in Claim 7, **characterised in that** the module (JEEP.DLL) generates a file (MISDEPS.DAT) when a missing dependence is detected or indicates an insufficient version level.

9. System of downloading objects or files in order to update software as claimed in Claim 1, **characterised in that** the grogram is sub-divided into a certain number of modules each defining a task specific to a terminal equipped with at least one telecommunications modem and a central unit.

10. System of downloading objects or files in order to update software as claimed in Claim 8, **characterised in that** this specific task is the task which corresponds to a jukebox and includes a specific main task, a certain number of modules, defining "window" functions of the display, which are as follows:
- a module (MOUSE.DJL) for exploiting mouse or touch screen signals;
- a module (WMESSAGE.DJL) for exploiting messages exchanged among the objects; - a module (FIL.DJL) for managing files on disks;
- a read-write module (FILIO.DJL) for files on disks;
- a module (JSTRUCT.DJL) for monitoring all the events generated by the hardware, such as the touch screen, the sound card, and the processing interface for coin equipment.

11. System of downloading objects or files in order to update software as claimed in Claim 1, **characterised in that** the module (SILOAD.DLL) includes means for managing the loading and modules specific to the task of the terminal, namely all said DJL modules as well as the jukebox library modules constituted by a module (WOBJECT. DJL) which manages the objects, the mixer and the purchases; a module (WCURSOR.DJL) which manages the movements of the cursor; a module (DBMAPI.DJL) which manages the database; a module (WFONTS.DJL) which manages all the font types; a module (PARSER.DLL) (PARSER analysis program) which analyses and generates the screens on the basis of the script and verifies the grammar with the aid of a grammar module (GRAMMAR.DJL) and a lexical module (LEXY.DJL).

12. System of downloading objects or files in order to update software as claimed in Claim 10, **characterised in that** the library loading module (SILOAD.DLL) includes a modules (WINDEF) which contains the list of files which have to be included in order to manage the windows of a window display which is provided on the monitor of the jukebox-type terminal.

13. System of downloading objects or files in order to update software as claimed in Claim 11, **characterised in that** this list of objects is composed of:
- an object module (OBJET WPSCREEN.DJO) which makes it possible to define the main page on the monitor;
- a modules (WSCREEN.DJO) which makes it possible to to determine in this main page the number of screens available and thus to enable the display of several windows or screens;
- a module (WIMAGE.DJO) which makes it possible to determine and to define in the screen the image which it will use;
- a module (WANIM.DJO) which makes it possible to define the animation when the image is animated;
- a module (WBUTTON.DJO) which makes it possible to define and manage the buttons which are used on the screen of the main page;
- a module (WLABEL.DJO) which makes it possible to create lapels enabling writing on an object; and
- a module (WSCROLLER.DJO) which makes it possible to define display zones for scrolling between two points.

14. System of downloading objects or files in order to update software as claimed in Claim 12, **characterised in that** the set of these object modules managed by the main task uses a library (JHANDLER) which makes it possible to defined the fixed uses of the screens and therefore to determine which are the interfaces which ensure the links to the different objects defined by the software modules.

15. System of downloading objects or files in order to update software as claimed in Claim 1, **characterised in that** the module (SILOAD.DLL) includes means for launching or loading the module (XCP.DJP) which makes it possible to manage payment tasks and also makes it possible to protect basic information in an IBUTTON.
